(19) Europäisches Patentamt
European Patent Office
Office européen des brevets

(11) EP 4 186 685 A1

# (12) EUROPEAN PATENT APPLICATION

(43) Date of publication:
**31.05.2023 Bulletin 2023/22**

(21) Application number: **21210261.0**

(22) Date of filing: **24.11.2021**

(51) International Patent Classification (IPC):
***B32B 5/18*** *(2006.01)* ***B32B 27/04*** *(2006.01)*
***B32B 27/08*** *(2006.01)* ***B32B 27/28*** *(2006.01)*
***B32B 27/30*** *(2006.01)* ***C08L 79/08*** *(2006.01)*
***C08L 81/06*** *(2006.01)*

(52) Cooperative Patent Classification (CPC):
**B32B 5/18; B32B 27/04; B32B 27/08; B32B 27/281; B32B 27/285; B32B 27/286; B32B 27/308; C08G 65/4056; C08G 75/23; C08L 71/00; C08L 79/08; C08L 81/06;**
B32B 2250/03; B32B 2250/40; B32B 2262/0269;

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Diab International AB**
**252 21 Helsingborg (SE)**

(72) Inventors:
- **POUMADERE, Thomas**
  **31170 Tournefeuille (FR)**
- **LAFFORGUE, Aurélien**
  **31470 Fontenilles (FR)**

(74) Representative: **Brann AB**
**P.O. Box 3690**
**Sveavägen 63**
**103 59 Stockholm (SE)**

## (54) SANDWICH PANEL OF THERMOPLASTIC POLYMERS

(57) A thermoplastic sandwich panel comprising a core layer arranged between a first and a second face sheet, wherein the core layer is a thermoplastic foam made of a polymer having a glass transition temperature (core Tg) wherein the face sheets comprise a thermoplastic based matrix polymer (TBMP) and reinforcing fibres; wherein the thermoplastic based matrix polymer has a glass transition temperature (TBMP Tg) equal to or lower than the core Tg.

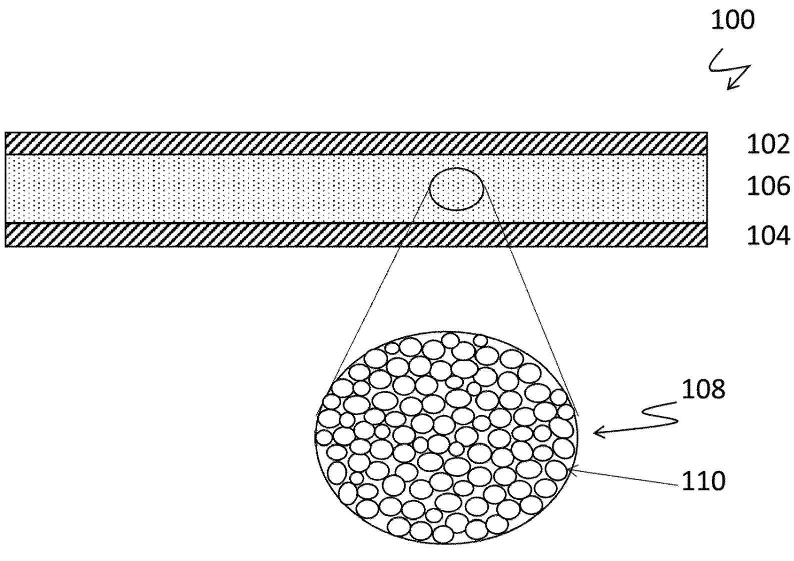


Figure 1.

EP 4 186 685 A1

(52) Cooperative Patent Classification (CPC): (Cont.)
B32B 2262/062; B32B 2262/101; B32B 2262/106;
B32B 2307/30; B32B 2307/50; B32B 2307/72;
B32B 2605/18

## Description

FIELD OF INVENTION

The present invention relates to sandwich panels made of thermoplastic polymers and a method of preparing the same. The panels fulfil the requirements for aircraft cabin interiors and are therefore suitable for such use.

BACKGROUND

When preparing sandwich panels two outer layers or face sheets are assembled onto a core layer which usually is a porous or honeycomb material. The face sheets, usually comprising one or two plies, are commonly adhered to the core layer by applying a phenolic resin to the core or the face sheets prior to assembling which upon activation reacts and crosslinks with the face sheets and the core layer and thereby creates adhesion between the layers and the core.

Pre-preg ("pre-impregnated") is a fibre composite material that is pre-impregnated with for example a phenolic or epoxy resin and are used when preparing sandwich materials. The phenolic resins of the typical prepregs commonly used in aircrafts cabin interiors cures according to polycondensation reaction during which water vapour is formed. This leads to major formation of porosity in the panel construction which may even be visible at the sandwich panel surface. This porosity visible after the demoulding of the sandwich part requires a lot of surface preparation time (pore filler application and manual sanding to have a perfect surface) before application of painting or decorative laminate.

Additionally, phenolic resins are unhealthy, and should if possible be avoided, and sandwich panels of phenolic resins are not suitable for recycling since they are made of thermoset resin.

For aircraft cabin interiors there are, of course, a number of requirements for the construction materials used. These requirements relate not only to mechanical properties but also to fire or flame properties and cosmetic as well.

There is therefore a need for a new sandwich construction which fulfils the requirements for aircraft cabin interiors and is easy to produce.

SUMMARY OF INVENTION

The aim of the present invention is to overcome the drawbacks of the prior art and present a sandwich panel which exhibits good mechanical properties, fulfils safety requirements, is easier and quicker to produce and is at least partly recyclable.

According to a first aspect the present invention relates to a sandwich panel according to claim 1.

In a second aspect the present invention relates to a method of preparing a thermoplastic sandwich panel comprising:

a. Preparing or providing a core layer of a thermoplastic foam made of a polymer having a glass transition temperature (core Tg) wherein the core layer has an initial thickness;
b. Preparing or providing a first and a second face sheet made of a thermoplastic based matrix polymer having a glass transition temperature (TMBP Tg) lower than or equal to the core Tg;
c. Arranging the core layer between the first and second face sheets forming a sandwich structure; wherein one or more mechanical stoppers are preferably arranged around the formed sandwich structure; and
d. Adhering the first and the second face sheets to the core layer by applying heat and pressure to the sandwich structure wherein the heating is done at or above the TMBP Tg.

In third aspect the present invention relates a method of preparing a thermoplastic sandwich panel comprising:

a. Preparing or providing a core layer of a thermoplastic foam made of a polymer having a glass transition temperature (core Tg) wherein the core layer has an initial thickness;
b. Preparing or providing a first and a second face sheet made of a thermoplastic based matrix polymer having a glass transition temperature (TMBP Tg);
c. Providing thermoplastic adhesive films;
d. Arranging the thermoplastic adhesive films between the first face sheet and the core layer, and between the second face sheet and the core layer forming a sandwich structure; and
e. Adhering the first and the second face sheets to the core layer by applying heat and pressure to the sandwich structure wherein the heating is done at or above the melting temperature of the thermoplastic adhesive film.

In a fourth aspect the present invention relates to a sandwich panel obtained by or obtainable by any of the methods according to the present invention.

All the embodiments disclosed herein may be combined with each other and with the different aspects unless stated otherwise.

BRIEF DESCRIPTION OF THE FIGURES

Figure 1, schematic illustration of a cross sectional view of a sandwich panel according to the present invention.

Figure 2, schematic illustration of a cross sectional view of the welding apparatus for preparing the sandwich panel of the present invention

Figure 3, photo of a shaped sandwich panel according to the present invention

Figure 4, photo of a shaped sandwich panel according to the present invention

Figure 5, photo of a shaped sandwich panel according to the present invention.

Figure 6, table of the welding properties when preparing sandwich panel without adhesive film.

Figure 7, properties of sandwich panels.

Figure 8, table of the welding properties when preparing sandwich panel with adhesive film.

Figure 9, properties of sandwich panels.

Figure 10, schematic illustration of a system for preparing the foam of the present invention.

SPECIFIC EMBODIMENTS

In one preferred embodiment of any of the aspects the glass transition temperature of the polymer of the thermoplastic foam (core Tg) is 160°C or higher, preferably 180°C or higher, more preferably 200°C or higher.
In another preferred embodiment of any of the aspects the glass transition temperature of the TBMP (TBMP Tg) is lower than the core Tg, preferably 1-70°C lower, more preferably 15-60°C lower.
In another preferred embodiment of any of the aspects the polymer of the thermoplastic foam of the core layer and/or the TBMP is a polymer or co-polymer comprising a repeating unit having the formula of

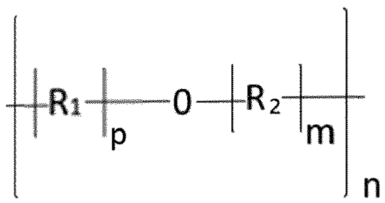

wherein R1 is selected from

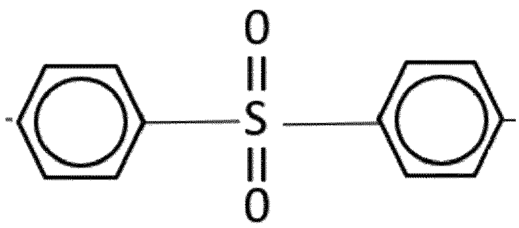

or

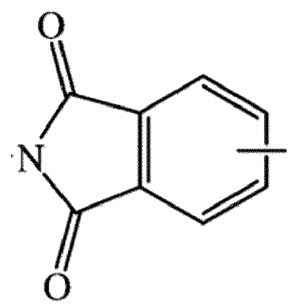

wherein R2 is selected from

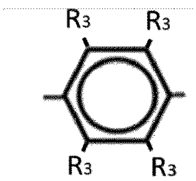

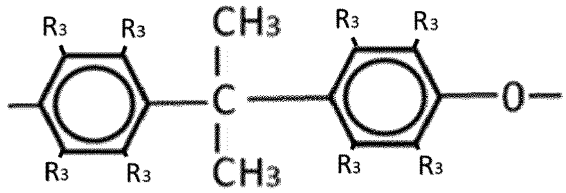

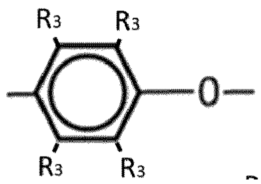

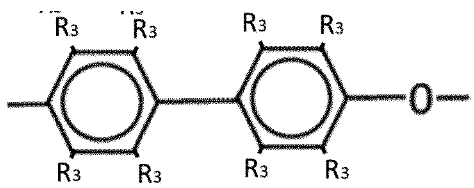

wherein

m = 0 or 1;
n = 60-400;
p = 0 or 1; and
wherein each R3 is selected from H, $CH_3$ or halogen.

In another preferred embodiment of any of the aspects the TBMP is amorphous or semi crystalline.

In another preferred embodiment of any of the aspects the TBMP of the face sheets is selected from polycarbonate or a co-polymer thereof, polyether imide or copolymer thereof, polymethacrylate imide or co-polymer thereof, polysulfone or copolymer thereof preferably polyethersulfone or co-polymer thereof or polyphenyl ethersulfone or co-polymer thereof.

In another preferred embodiment of any of the aspects the polymer of the thermoplastic foam of the core layer is selected from polyether imide or copolymer thereof, polymethacrylate imide or co-polymer thereof, polysulfone or copolymer thereof preferably polyethersulfone or co-polymer thereof or polyphenyl ethersulfone or co-polymer thereof, or copolymer with any of polyaryl family.

In a preferred embodiment the TBMP of the face sheets is polycarbonate or polyether imide and the thermoplastic foam of the core layer is polyether sulfone.

In another preferred embodiment of any of the aspects the reinforcing fibres is selected from glass fibres, carbon fibres, cellulose fibres, and aramid fibres.

In another preferred embodiment of any of the aspects the face sheets are dense or non-porous.

In another preferred embodiment of any of the aspects the core has an essentially homogenous cell structure or wherein the core is free from any channels or voids.

In another preferred embodiment of any of the aspects the core has an average cell size of less than 0.5mm, preferably less than 0.4mm, preferably a density of 150kg/$m^3$ or lower, more preferably 130kg/$m^3$ or lower, more preferably 100kg/$m^3$ or lower, more preferably 50kg/$m^3$, and wherein the thickness is preferably 70mm or lower, more preferably 50mm or lower.

In another preferred embodiment of any of the aspects the panel is essentially free from any solvent or crosslinked polymer system

In another preferred embodiment of any of the aspects the panel is essentially free from phenolic resins.

In another preferred embodiment of any of the aspects the face sheets are directly adhered to the core layer.

In another preferred embodiment of any of the aspects the face sheets are adhered to the core layer via a thermoplastic adhesive film

In another preferred embodiment of any of the aspects the face sheets are adhered to the core layer by heating and pressing.

In another preferred embodiment of any of the aspects the face sheets have a thickness in the range of 0.15mm to 1.5mm.

In another preferred embodiment of any of the aspects the sandwich panel fulfils the requirements of

Vertical burn 60s test according AITM 2.0002 A (issue 3) / CS 25, App. F, Part. I. §(a)(1)(i), Amdt 23 - FAA AMFTH Chapter 1

Determination of the Density of the Smoke according to AITM 2-0007 A (issue 3) - FAA AMFTH Chapter 6 - BSS 7238 Rev: (C)

Determination of the Toxic Components on Combustion Products (Flaming mode) according to AITM 3-0005 (issue 2) - BSS7239 Rev: (A)

Heat Release test according to AITM 2-0006 (issue 3) - FAA AMFTH Chapter 5 - BSS 7322 Rev: (B)

In another preferred embodiment of any of the aspects the peel strength of the panel with a polycarbonate TMBP is 18.0N/cm or higher, preferably 19N/cm or higher, more preferably 20N/cm or higher, more preferably 21N/cm or higher, more preferably 23N/cm or higher according to EN2243-3.

In another preferred embodiment of any of the aspects the panel is recyclable.

In another preferred embodiment of any of the aspects said panel is or is a part of aircraft cabin interior preferably sidewalls and ceiling panels, seat shells, lavatories, galleys, overhead bins and bin doors, bulkheads, floor panels or cargo linings.

In yet another embodiment of any of the aspects the heating is done at a temperature of 10°C higher than TMBP Tg, more preferably 15°C higher than TBMPTg but wherein the temperature is below the core Tg more preferably 1-15°C below the core Tg, more preferably 2-10°C below the core Tg.

In yet another embodiment of any of the aspects the core Tg is less than one degree higher than the TMBP Tg or equal to the TMBP Tg.

In yet another embodiment of any of the aspects the melting temperature of the thermoplastic adhesive film is lower than the TMBP Tg.

In yet another embodiment of any of the aspects the TMBP Tg is lower than or equal to the core Tg or wherein TMBP Tg is higher than the core Tg.

In yet another embodiment of the third aspect the melting temperature of the thermoplastic adhesive film is at least 5°C lower than the TMBP Tg, more preferably at least 10°C lower.

In yet another embodiment of any of the aspects the thermoplastic sandwich panel has a final core layer thickness and wherein the initial core layer thickness is 0.2 to 10.0mm larger than the final core layer thickness, preferably 0.3 to 5mm, more preferably 0.4 to 3mm, more preferably 0.5 to 1.0mm larger.

In yet another embodiment of any of the aspects wherein one or more mechanical stoppers are arranged around the formed sandwich structure and wherein the mechanical stoppers preferably has a height equal to the final core layer thickness. In yet another embodiment of any of the aspects the face sheets are painted or decorated during the adhering

to the thermoplastic foam using in mould-painting preferably by applying or adding paint to the mould or face sheets prior to the step of applying pressure and heat to the mould, or using a decorative film that is welded to the face sheets in the mould when the face sheets are welded to core material.

## DETAILED DESCRIPTION OF THE INVENTION

In the present application glass transition temperature (Tg) is determined by Differential Scanning Calorimetry (DSC) conducted according to the reference standard ASTM D 3418-08 in the pure polymer or by Dynamic Mechanial Analysis (DMA) according to the standard is ASTM E1640-09 in the foam.

In the present application peel strength is determined according to EN2243-3 unless stated otherwise.

In the present application the term "cell size" refers to the diameter of the cell and is determined by using a microscope and analysing the pictures according to ASTM D3576.

### Sandwich panel

Referring now to Figure 1. The sandwich panel (100) according to the present invention comprises face sheets, a first face sheet (102) and a second facet sheet (104), and a core layer (106) arranged between the two face sheets. The face sheets (102) (104) comprise a thermoplastic based matrix polymer (TBMP) and reinforcing fibres and the core layer (106) is a thermoplastic foam. The foam has a homogenous cell structure (108) where the cells (110) have an average cell size of preferably less than 0.5mm, more preferably less than 0.4mm, more preferably less than 0.3 and preferably the foam has no cells or voids larger than 5mm and preferably no channels.

By using face sheets and a core layer comprising a thermoplastic polymer the present inventors found that sandwich panels may be prepared without any curing or crosslinking reactions. Instead, only heat and pressure are needed to be applied in order for the face sheets to adhere or weld to the core layer. Since polycondensation curing or crosslinking generally generates volatile products or gas prior art panels will have face sheets with large voids and porous or rough surfaces. As a result of the present invention the surface finish after demolding of the panel is significantly improved and the outer surface of the panel is smooth and essentially free from pores. Such a surface does not require any after treatment in order to hide defects prior to painting for example or application of decorative laminate and thereby the panels become cheaper to produce. Also, the number of steps in the production of said panel is reduced since the face materials are thermoplastic and not thermoset, so that they are not tacky and it is easier and thus quicker to handle them, shape them and install them on the surface of the core before the assembling step. Furthermore, the removal of phenolic resins is a major advantage from a health and an environmental perspective.

The core layer (106) of the present sandwich panel is a thermoplastic foam made of a polymer with a glass transition temperature (core Tg) preferably of 160°C or higher, preferably 180°C or higher, more preferably 200°C or higher, preferably 210°C or higher, more preferably 220°C or higher but preferably not higher than 240°C.

Preferably the thermoplastic foam of the core layer is a polymer or a co-polymer comprising the repeating unit of

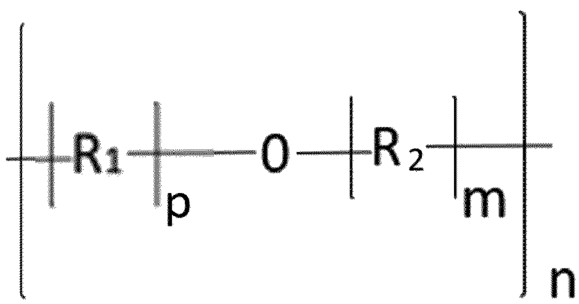

Wherein R1 is selected from

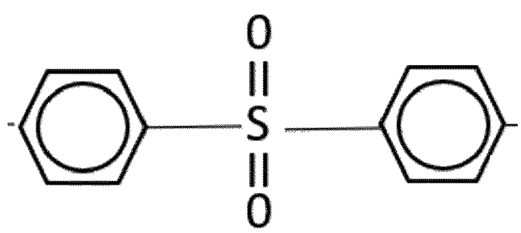

or

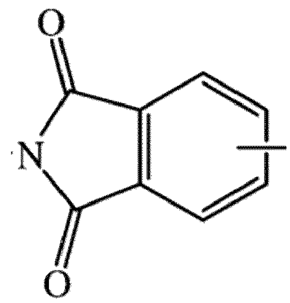

wherein R2 is selected from

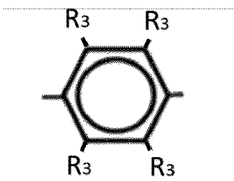

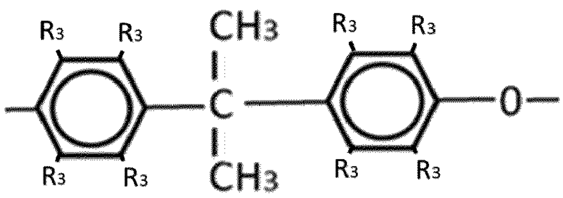

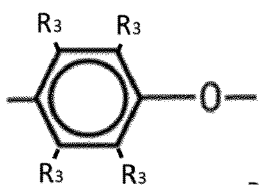

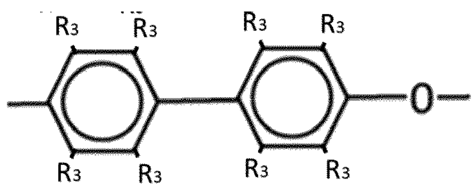

n = 60-400 and m = 0 or 1 p = 0 or 1.

Each R3 is selected from H, $CH_3$ and halogen.

In one embodiment the polymer of the thermoplastic foam of the core layer is selected from polyether imide or copolymer thereof, polymethacrylate imide or co-polymer thereof, polysulfone or copolymer thereof preferably polyethersulfone or co-polymer thereof or polyphenyl ethersulfone or co-polymer thereof, or copolymer with any of polyaryl family. The thermoplastic foam of the core could also be a physical blend of two or more of the listed polymers.

Density of the foam is preferably 200kg/$m^3$ or lower, more preferably 150kg/$m^3$ or lower, more preferably 100kg/$m^3$ or lower, more preferably 50kg/$m^3$ or lower. An advantage of the present invention is that the mechanical properties are sufficient or even improved even for low density panels. Especially skin adhesion is improved and the face sheets of the present invention have better mechanical properties than the prior art phenolic based face sheets. A further advantage of the present invention is that the foam of the core has a small average cell size, and also an even cell size distribution providing more isotropic mechanical properties. The cells are preferably 0.5mm or smaller, more preferably 0.4mm or smaller more preferably 0.3 mm or smaller, and the foam is essentially free from any channels or larger voids. In one embodiment the foam does not have any voids or cells larger than 5mm, preferably not have any

voids or cells larger than 3mm. In one embodiment the foam is defined as having a closed cell structure, an open cell structure or a combination of closed and open cell structure.

Face sheets of the present invention, the first (102) and the second face sheets (104) arranged on opposite side of the core layer (106), comprises a thermoplastic based matrix polymer (TBMP) and reinforcing fibres. The face sheets are prepregs and comprises the thermoplastic based matrix polymer (TBMP) and reinforcing fibres in a preferred weight ratio of 25-40:75-60 matrix polymer to fibres, preferably 30-35:70-65. Preferred reinforcing fibres are glass fibre, carbon fibre, cellulose fibre or aramid. The reinforcing fibres may be in form of continuous mats, fabric or sheets and may be weaved, knitted, braided or sprayed. In a preferred embodiment the face sheets comprise two layers or plies of fibre fabric and TBMP and wherein the two layers or plies of fibre fabric are preferably in the form of mats, satin, fabrics or sheets, preferably glass fibre satin fabric.

The TBMP has a Tg (TBMP Tg) equal to or lower than the Tg of the polymer of the thermoplastic foam in the core (core Tg). Preferably the TBMP Tg is lower than the core Tg and more preferably 1-70°C lower, more preferably 15-60°C lower. The TBMP is preferably amorphous since crystalline or semi-crystalline polymers exhibit a lower adherence and are harder to weld to the foam core. In one embodiment the degree of crystallinity is less than 10%, preferably less than 5%. In one embodiment the TBMP is fully amorphous.

Preferably the TBMP is a polymer or a co-polymer comprising the repeating unit of

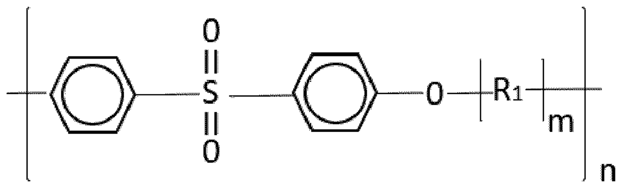

wherein R1 is selected from

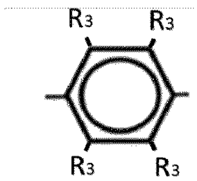

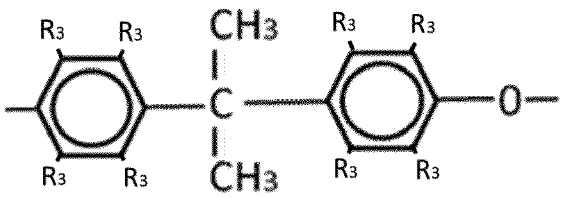

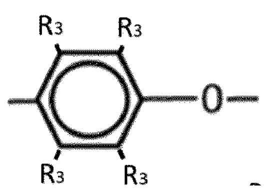

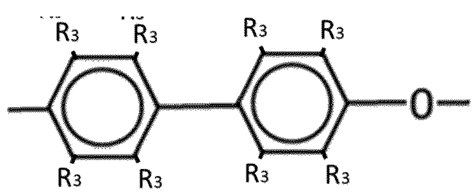

wherein

n = 60-400 and m = 0 or 1 and each R3 is selected from H, $CH_3$ or halogens.

The two face sheets preferably comprise the same TBMP.

In one embodiment the TBMP of the first and the second face sheets is selected from polycarbonate or a co-polymer thereof, polyether imide or copolymer thereof, polymethacrylate imide or co-polymer thereof, polysulfone or copolymer thereof preferably polyethersulfone or co-polymer thereof or polyphenyl ethersulfone or co-polymer thereof.

In one preferred embodiment the polymer of the thermoplastic foam of the core layer is a polysulfone preferably polyethersulfone or co-polymer thereof or polyphenyl ethersulfone or co-polymer thereof and the TBMP is polycarbonate.

In one preferred embodiment the thermoplastic foam of the core layer is polysulfone preferably polyethersulfone or co-polymer thereof or polyphenyl ethersulfone or co-polymer thereof and the TBMP is polyether imide.

In another preferred embodiment the polymer of the thermoplastic foam of the core layer and the TBMP of the face sheets is selected from polyethersulfone or co-polymer thereof, or polyphenyl ethersulfone or co-polymer thereof.

In one embodiment the polymer of the thermoplastic foam and the TBMP are the same. In another embodiment polymer of the thermoplastic foam and the TBMP are different polymers.

The face sheets are preferably adhered directly to the core layer, preferably by heat and pressure. Still the face sheets may be adhered to the core layer via a thermoplastic adhesive film. This is preferred when the difference in Tg between the polymer of the thermoplastic core and the TBMP is small such as less than 1°C or when the core Tg and the TBMP Tg are the same or when the skins are not 100% amorphous.

Thickness of the core layer and the face sheets may be adapted depending on the application. A preferred thickness of the core layer is 50mm or less, preferably 30mm or less, more preferably 20mm or less, more preferably 15mm or less but thicker than 5 mm. A preferred thickness of the face sheets is 0.10 to 1.0mm more preferably 0.15 to 0.8mm, more preferably 0.15 to 0.6mm. The face sheets are dense or non-porous and have a smooth and non-porous surface

As a result of this new sandwich construction the present invention exhibits improved peel strength as shown in the examples herein. The peel strength of the panel may be as high as 23-29N/cm or even higher according to EN2243-3 for polycarbonate skins, or 2.7-3.5mmkg/mm according to ASTM D1781.

Furthermore, since the present sandwich panels are thermoplastic they may be easily shaped which is an advantage.

A major advantage of the present invention is that the sandwich panel fulfils the requirements of

a) Vertical burn 60s test according AITM 2.0002 A (issue 3) / CS 25, App. F, Part. I. §(a)(1)(i), Amdt 23 - FAA AMFTH Chapter 1

b) Determination of the Density of the Smoke according to AITM 2-0007 A (issue 3) - FAA AMFTH Chapter 6 - BSS 7238 Rev: (C)

c) Determination of the Toxic Components on Combustion Products (Flaming mode) according to AITM 3-0005 (issue 2) - BSS7239 Rev: (A)

d) Heat Release test according to AITM 2-0006 (issue 3) - FAA AMFTH Chapter 5 - BSS 7322 Rev: (B).

As a result, the present sandwich panels are suitable to be used in aircraft cabin interiors. The sandwich panels are preferably used as sidewalls and ceiling panels, business class seat shells, lavatories, galleys, overhead bins and bin doors, bulkheads, floor panels or cargo linings.

Furthermore, the present inventors have shown that the sandwich panel of the present invention may be grinded to pellets and injection molded. Hence the present panels are thermoplastic and reusable, Example 2.

Method of preparing sandwich panel

The present invention also relates to a method of preparing a thermoplastic sandwich panel. Said panel is preferably the sandwich panel according to claim 1.

A core layer of a thermoplastic foam having an initial thickness is provided or prepared according to any suitable method such as extrusion or injection moulding.

Face sheets of a TBMP and reinforcing fibres are provided or prepared using any suitable method. In a preferred method a prepreg is prepared by impregnating fibres with the TBMP at a suitable weight ratio. A preferred weight ratio between TBMP and reinforcing fibres is 25-40:75-60. Preferred reinforcing fibres are glass fibre, carbon fibre, cellulose fibre and aramid fibres. The reinforcing fibres may be in form of continuous mats, fabric, satin or sheets and may be weaved, knitted, braided or sprayed. In a preferred embodiment the reinforcing fibres are glass fibre satin fabric The core layer is arranged between two face sheets, a first and a second face sheet, into a sandwich structure. The face sheet may be composed of one or more layers or plies of fibres and TBMP, preferably two or more layers or plies. For cabin interior the number of plies is preferably one, two or three. By applying several layers or plies the thickness and the properties of the panel may be adapted.

In one embodiment the sandwich panel is prepared without the use of any adhesive film or any other adhesive.

Instead heat and pressure are applied to the sandwich structure for a sufficient period of time. Heating is done at a temperature at or above the glass transition temperature of the TBMP of the face sheets but preferably not higher than the core Tg in order to avoid damage or collapse of the core.

In another embodiment and adhesive film is arranged between the face sheets and the core layer. Said film may be arranged on the core layer or on the face sheets prior to arranging the sandwich structure. Heat and pressure are then applied to the sandwich structure for a sufficient period of time. Heating or welding is done at a temperature at or above the melting temperature of the adhesive film to facilitate adherence to the core layer. In order not to damage the face sheets or the core the melting temperature of the adhesive film is preferably lower than the TMBP Tg and the welding temperature is preferably below the TMBP Tg.

When adhering the face sheets to the core layer, directly or via an adhesive film, the heating should not be done at a temperature and during a period of time that affects the properties of the core layer. The welding temperature when not using an adhesive film is preferably as high as possible but preferably below the core Tg since otherwise the properties of the core may be reduced.

Adhering the face sheets directly to the core, not using an adhesive film, requires heating at or above the TBMP Tg. In a preferred embodiment the temperature (welding temperature) is 10°C higher than TMBP Tg but below the core Tg, more preferably 15°C higher than TBMP Tg but below the core Tg, more preferably 1-15°C, more preferably 2-10°C below the core Tg. Without being bound by theory but this is believed to improve the peel strength, Example 1 and Figure 7. The welding step, heating and pressing, is preferably done during 0.5-5 minutes, preferably not more than 1 minute.

An advantage of the present invention is that induction heating may be used to reach the welding temperature allowing a heating and cooling ramp of 80-100°C/min. That is the heating step may be drastically shortened compared to a typical thermoset (phenolic) panel commonly used today in cabin interiors.

The advantage of the induction heating method for steel molds is a) that it is the most efficient thermal heating method, b) it is a direct heating of the mold steel (the alternative current provided to the inductors located in the mold generates a magnetic field around them which creates an induced current in the steel mold that leads to heating of the steel material by Joule effect), and c) there is no thermal inertia of the heating device when the alternative current is stopped and so the associated magnetic field and induced current are consequently disappearing (contrary to the thermal intertie that will remain in heating cartridges device or in fluids pipes devices when the heating is stopped in such common heating devices) and that makes the cooling of the mold quicker as well since the cooling (performed using water circulating in pipes located insides the mold) is only dedicated to cool down the steel mold and not to fight against the thermal inertia in the heating device as well.

Adhering the face sheets using an adhesive film the heating should be done at or above the melting temperature of the adhesive film. In one embodiment the heating is done at a temperature 10-20°C higher than the melting temperature of the adhesive film but below the TMBP Tg, preferably 2-10°C below TMBP Tg. Heating or welding is preferably done during 0.5-5 minutes.

Applied pressure is preferably in the range of 1-10bar. The heating and pressing is done until sufficient adherence is obtained. Depending on the material of the sandwich structure and the thickness of the layers the heating and the pressing (the welding) may be done during 30 seconds or longer, or 1 minute or longer, but preferably not longer than 15 minutes, more preferably not longer than 5 minutes.

Turning to figure 2. The apparatus 200 for welding the sandwich panel 100 comprises pressing and heating tools or plates 202 and preferably also mechanical stoppers 204 arranged around the sandwich panel. The mechanical stoppers 204 has a height $\beta$ that is equal to or essentially equal to the wanted final sandwich panel thickness, and said stoppers may be any suitable arrangement that servers the purpose of obtaining the final sandwich panel thickness. The core layer preferable has an initial thickness $\alpha$ which is higher than the wanted core layer thickness of the sandwich panel. This extra initial core layer thickness $\alpha$ may be 0.2 to 10.0 mm larger than the wanted or obtained thickness in the panel but preferably 0.5 to 1.0mm. Mechanical stoppers 204 are preferred when using a larger initial core layer thickness since it serves the purpose of obtaining the final thickness and facilitate densification of the panel. Without being bound by theory but larger extra initial thickness leads to increased peel strength, Example 1 and Figure 7.

Since no polycondensation reaction occurs during the heating no vapour is formed leaving a smooth surface of the face sheets. This allows the panels to be painted during the adhering step preferably by using mould-painting. Preferably the paint is applied to or added to the mould or to the panel prior to applying heat and pressure. Alternatively, the obtained demoulded panel may be painted without any after treatment such as polishing. The present invention further facilitates the use of decorations or decorative films that could also be adhered on the skins during the welding step as an alternative method. By adding or applying a decorative film to face sheets prior to the pressing and heating the obtained sandwich panel no additional steps in order to obtain said decoration is necessary.

An advantage of the present invention is that shaped sandwich panels may easily be prepared, Figure 3-5.

EXAMPLES

**Example 1** - **Sandwich panels without adhesive film:**

The face sheet layers or plies were provided by an external provider and the foam cores were prepared as disclosed in the example here below. The face sheets were made of a thermoplastic (TP) resin and fibers. Sandwich panels were prepared by arranging one or more face sheet layers on the top and the bottom of the foam core.

The sandwich construction was then arranged between heating plates of a press welding apparatus already heated to a temperature of 20-30°C below the Tg of the thermoplastic resin of the face sheets.

Mechanical stoppers were installed around the sandwich panels. These mechanical stoppers were made of steel and had the final desired thickness of the sandwich panel (ie: 12.7mm for example). The mechanical stoppers were ensuring the final thickness of the sandwich panel. This is illustrated in Figure 2.

A pressure between 2 and 10 bars was then applied to weld.

When the plates were in contact with the mechanical stoppers) and when the target pressure was reached, the temperature was increased to the welding temperature. In order to be able to weld the face sheets to the foam core (i.e.: in order to have a remaining adhesion after demolding the sandwich panel), the welding temperature was above the TBMP Tg. The duration of the welding stage was 15 min.

Also, the extra foam core thickness added in the panel composition (ex: using 2 face sheets 0.45mm thickness each and a foam core of 12.8mm thickness in order to produce 12.7mm final sandwich thickness corresponds to an extra foam core thickness of + 1.0mm) compared to the mechanical stoppers thickness (ie: the target sandwich panel thickness) can generate a thickness release after the demolding of the panel. That corresponds to a relaxation of the thickness of the foam core after the process. In order to avoid that relaxation, the internal stresses introduced during the press welding manufacturing process need to be released before demolding. The best strategy is to perform the welding close to the Tg of the foam core (10°C or less to the foam core Tg).

The initial extra foam core thickness used (i.e.: corresponding to the difference between 1) the addition of the thicknesses of all the components (skins, foam) assembled to produce the panel and 2) the thickness of the mechanical stoppers) may set from +0.2mm to several mm. It is more preferred to use an initial thickness of +0.5mm and +1.0mm. It has been tested successfully by the inventors that at least until +2.0mm of initial foam core extra thickness can be released by welding the skins to the core at a temperature close to the Tg of the foam core (between Tg and 10°C less than Tg).

The heating ramp was 15°C/min. Still an advantage of the present invention is that induction heating may be applied allowing a heating ramp of 80 -100°C/min. Tests using an induction heating device to heat the mold was performed with polycarbonate/glass fibers skins for each face sheet and 13.0mm PES (polyether sulfone) foam as a core. The introduction temperature was 30°C below the Tg of the polycarbonate matrix of the face sheets. The welding temperature was 10°C below the Tg of the PES foam core. The heating and the cooling was set in order to be as fast as possible and still have homogeneous temperatures through the mold at the same time. The demolding was also performed at 30°C below the Tg of the matrix of the face sheets (cooling 15°C/min). The total cycle time from introduction of the material in the mold and demolding the assembled panel was 3min 40s. That can be decreased by using a more optimized mold (more optimized thermal oriented design of the mold to make the temperature increases and decreases more quickly).

Figure 6 lists the welding properties of the different sandwich panels prepared.

Figure 7 discloses the sandwich panel properties.

(1) Peel Strength determination according to EN 2243-3, common cabin requirements: $\tau > 11.0$ N/cm"

(2) Flammability test according to AITM 2.0002 A (issue 3) / CS 25, App. F, Part. I. §(a)(1)(i), Amdt 23 - FAA AMFTH Chapter 1, Airbus / Boeing requirements

(3) Heat Release test according to AITM 2-0006 (issue 3) - FAA AMFTH Chapter 5 - BSS 7322 Rev: (B) Airbus / Boeing requirements:

$$\text{Burn length} < 150\text{mm}$$

$$\text{After flame time} < 15\text{s}$$

$$\text{After flame time drips} < 3\text{s}$$

(4) Determination of the Density of the Smoke according to AITM 2-0007 A (issue 3) - FAA AMFTH Chapter 6 - BSS 7238 Rev: (C) Airbus / Boeing requirements: Ds<200

(5) determination of Toxic Components on Combustion Products (Flaming mode) according to AITM 3-0005 (issue 2) - BSS7239 Rev: (A) Airbus / Boeing requirements

$$\text{HRR}_{\text{max 5min}} < 65\ \text{kW/m}^2$$

$$\text{THR}_{\text{2min}} < 65\ \text{kW.min/m}^2$$

What was found was that the higher the extra thickness the higher the peel strength.

What the inventors further found was that the higher the welding temperature the higher the peel strength. Nevertheless, the welding temperature should not be higher the Tg of the foam core in order to avoid the foam to collapse during the welding process.

**Example 2** - **Recyclability of sandwich panels**

Thermoplastic sandwich panels prepared as disclosed in Example 1 with PC based face sheets has been successfully recycled.

The panel was grinded in a first step using knife grinder and various kind of sieves (5mm, 2mm, 1mm). It was possible to grind at the same time the whole panel (face sheets made of 2 layers of 7581 glass fibers fabric each (1 layer is 300g/$m^2$ dry weight Satin 8 glass fabric) bonded on the PES density 50kg/$m^3$ foam core thickness 12.7mm). The grinding step led to PES foam/fibers/PC matrix clusters or particles that managed to pass through the sieves. So, the size of these clusters or particles depended on the size of the sieve used. Sieve 5mm needs to be used before grinding with 2mm sieves in the second step.

Optical microscopy was performed to verify the granulometry of the clusters / particles. For each kind of sieve used, it was confirmed that the length of the fibers was lower than the size of the sieve used (5mm, 2mm, ...).

Then the particles obtained after consecutive grinding through the 5mm sieves and 2mm sieves was successfully extruded in an extruder in order to homogenize the mix. A 3mm diameter die was used. The feeding temperature (2mm particles introduced) was room temperature. The temperature in the screw (which role is to make the mix progress to the die where the materials were extruded) was set in order the mix to reach 280°C at the die area. The speed of the die rotation was 60rpm. The obtention of a homogeneous extruded filament validated the second step of the recycling process. That step was a great achievement since there were a lot of fibers in the mix (49% in weight and up to 2mm long) and also two different polymers (PES of the foam core and PC of the face sheets matrix) with two different Tg and two different degradation temperature not to exceed.

Then the third step of the recycling process consisted in cutting the extruded filament into pellets using a multi knife system at room temperature. The diameter of the pellets was 3mm (the diameter of the extruder die) and the length was 3mm also.

After that, the pellets were successfully injected during the fourth and last step of the recycle of the TP panels using an automated injection press. Two kind of molds were used: a dogbone shape (75mm length x 10mm wide x 2mm thickness) and a plate shape (80mm length x 10mm wide x 4mm thickness) for respective injected volumes of 28$cm^3$ and 53$cm^3$. The injection threshold was 2mm diameter. The injection parameters were:

- molds temperature: 110°C
- injection temperature 300°C
- injection pressure 130bars
- injection duration 5s
- holding pressure 90bars
- holding duration 3s
- cooling duration 2s for the 2mm thick dogbone and 5s for the 4mm thick plate

Several tens of parts have been automatically injected (including automatic feeding of the press with pellets and automatic demolding of the parts as well using ejectors).

All the four steps of this recycling process went perfectly well which demonstrated the feasibility of the recycling of this material which is a great challenge due to the high fibers ratio (49% in weight), the length of the fibers (up to 2mm), and the two polymers present in the mix with their two different Tg.

**Example 3** - **Sandwich panels with adhesive film**

Another kind of full thermoplastic panel could be produced by using a thermoplastic adhesive film to bond the face sheets and the core together.

This solution is useful in case the TP face sheets either are semi crystalline and consequently no direct welding on the foam core is possible or have a Tg too close to the foam core Tg (so that the foam can collapsed during the welding), a thermoplastic adhesive can be used to weld the skins and the foam core together.

The main method to assembly such a panel is exactly the same than the one described in Example 1. It differs in the fact that one layer of thermoplastic film or adhesive film was arranged between the core and each of the two face sheets (the top and the bottom).

The adhesive film was provided by an external provider.

Then, the sandwich components mentioned above were installed between the heating plates of a press welding already heated at 20-30°C below the Tm (melting temperature) of the TP adhesive film (which needs to be lower than the Tg of the TP matrix of the face sheets).

Mechanical stoppers were also installed around the sandwich components. Here no more than +0.2mm extra initial foam core thickness was since the Tm of the TP film used was significantly lower than the Tg of the core and thereby the thickness release could not be avoided due to the low temperature of process vs. the Tg of the core.

The press was then closed applying the target pressure: between 2 and 10 bars.

When the press was closed (when the plates are in contact with the mechanical stoppers) and when the target pressure was reached, then the temperature was increased to the welding temperature. The welding was done here by melting the TP adhesive film.

Duration of the welding stage depends on the time needed for the resin of the face sheets to reach the welding temperature, here around 30 seconds to 5 min was enough.

Demolding of the panel was done at 30°C below the melting temperature.

Figure 8 discloses the welding properties for the panels prepared.

Figure 9 discloses sandwich panel properties.

(1) Peel Strength determination according to EN 2243-3, "common Cabin requirements: $\tau > 11.0$ N/cm"

(2) Flammability test according to AITM 2.0002 A (issue 3) / CS 25, App. F, Part. I. §(a)(1)(i), Amdt 23 - FAA AMFTH Chapter 1, Airbus / Boeing requirements

(3) Heat Release test according to AITM 2-0006 (issue 3) - FAA AMFTH Chapter 5 - BSS 7322 Rev: (B) Airbus / Boeing requirements:

$$\text{Burn length} < 150\text{mm}$$

$$\text{After flame time} < 15\text{s}$$

$$\text{After flame time drips} < 3\text{s}$$

(4) Determination of the Density of the Smoke according to AITM 2-0007 A (issue 3) - FAA AMFTH Chapter 6 - BSS 7238 Rev: (C) Airbus / Boeing requirements: Ds<200

(5) determination of Toxic Components on Combustion Products (Flaming mode) according to AITM 3-0005 (issue 2) - BSS7239 Rev: (A) Airbus / Boeing requirements

$$HRR_{max\ 5min} < 65\ kW/m^2$$

$$THR_{2min} <65\ kW.min/m^2$$

**Example 4** - **Core foam production**

The core foam of the present invention is preferably produced by extrusion foaming.

In a general and non-limiting disclosure of the foam process the extruder receives the raw material in solid form preferably pellets, properly treated and fed, at the inlet of a twin-screw extruder (TSE) at high pressure and temperature. The heating of the extruder barrel and the design of the screw elements enables the melting of the polymer and mixing of all solid raw materials. Next is the injection of the foaming agents, at high pressure and temperature. The obtained mixture is treated with suitable mixing elements and may be filtered. Then the homogeneous melt is passed through a cooling area. This cooling step can be done by a cooling mixer, static mixer or single screw designed for cooling, or a combination of the technology for cooling melt at proper temperature and high pressure.

The cooled melt is still at high pressure and above the solidification temperature and is transported into a die having a slit opening or a multi strands with appropriate design. When the die is opened a fast pressure drop causes the blowing agents to migrate from the polymer melt into cellular bubbles creating the core foam in the shape of sheets. Specific dimensions and shapes of the core foam is produced by cutting the obtained foam sheets. A system for preparing a foam is illustrated in Figure 10.

A typical process for a polyether sulfone foam used in a panel according to the present invention is:
Raw material:

- PES polymer SUMICACELL 3600G: 28-86.7%
- Recycled PES foam: 10-60%
- Nucleator (talc) 0.2-2%
- Blowing agent (acetone): 3-6%
- Other additive or stabilizer: 0.1-4%

Primary extruder heated in a range: 280-300°C
Secondary extruder cooled at: 205-240°C
Die setting at 170-235°C
The products made in according with the above component generate a family of foams as from below table

Table 5. Core foam properties.

| | Test procedure | Min values at nominal density | Max values at nominal density |
|---|---|---|---|
| Density range | ASTM D 1622 | 40 | 130 |
| Compressive strength | ASTM D 1621 | 0.35 | 1.7 |
| Compressive Modulus | ASTM C 365 | 9 | 60 |
| Shear strength | ASTM C 273 | 0.6 | 1.7 |
| Shear Modulus | ASTM C 273 | 8.5 | 30 |
| Shear strain | ASTM C 273 | 70 | 80 |

**Claims**

1. A thermoplastic sandwich panel comprising a core layer arranged between a first and a second face sheet, wherein the core layer is a thermoplastic foam made of a polymer having a glass transition temperature (core Tg) wherein the face sheets comprise a thermoplastic based matrix polymer (TBMP) and reinforcing fibres; wherein the thermoplastic based matrix polymer has a glass transition temperature (TBMP Tg) equal to or lower than the core Tg.

2. The thermoplastic sandwich panel according to claim 1 wherein the glass transition temperature of the polymer of the thermoplastic foam (core Tg) is 160°C or higher, preferably 180°C or higher, more preferably 200°C or higher.

3. The thermoplastic sandwich panel according to claim 1 or 2 wherein the glass transition temperature of the TBMP (TBMP Tg) is lower than the core Tg, preferably 1-70°C lower, more preferably 15-60°C lower.

4. The thermoplastic sandwich panel according to any one of claim 1 to 3 wherein the polymer of the thermoplastic foam of the core layer and/or the TBMP is a polymer or co-polymer comprising a repeating unit having the formula of

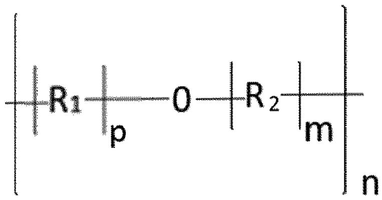

wherein R1 is selected from

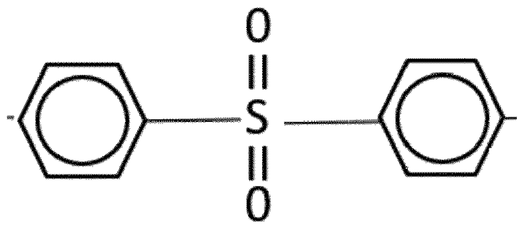

or

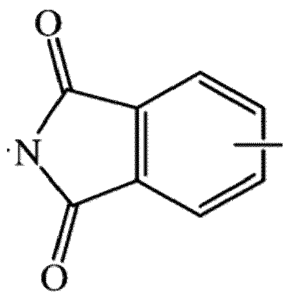

wherein R2 is selected from

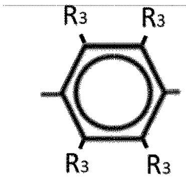

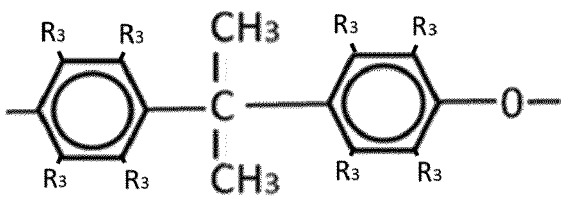

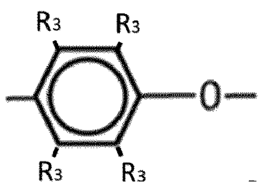

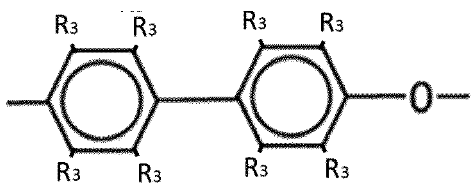

wherein

m = 0 or 1;
n = 60-400;
p = 0 or 1; and
wherein each R3 is selected from H, $CH_3$ or halogen.

5. The sandwich panel according to any of the preceding claims wherein the TBMP is amorphous.

6. The sandwich panel according to any one of claim 1 to 5 wherein the TBMP of the face sheets is selected from polycarbonate or a co-polymer thereof, polyether imide or copolymer thereof, polymethacrylate imide or co-polymer thereof, polysulfone or copolymer thereof preferably polyethersulfone or co-polymer thereof or polyphenyl ethersulfone or co-polymer thereof, or copolymer with any of polyaryl family.

7. The sandwich panel according to any one of claim 1 to 6 wherein the polymer of the thermoplastic foam of the core layer is selected from polyether imide or copolymer thereof, polymethacrylate imide or co-polymer thereof, polysulfone or copolymer thereof preferably polyethersulfone or co-polymer thereof or polyphenyl ethersulfone or co-polymer thereof.

8. The sandwich panel according to any of the preceding claims wherein the panel is essentially free from phenolic resins.

9. The sandwich panel according to any of the preceding claims wherein the face sheets are directly adhered to the core layer.

10. A method of preparing a thermoplastic sandwich panel comprising:

a. Preparing or providing a core layer of a thermoplastic foam made of a polymer having a glass transition temperature (core Tg) wherein the core layer has an initial thickness;
b. Preparing or providing a first and a second face sheet made of a thermoplastic based matrix polymer having a glass transition temperature (TMBP Tg) lower than or equal to the core Tg;
c. Arranging the core layer between the first and second face sheets forming a sandwich structure; and
d. Adhering the first and the second face sheets to the core layer by applying heat and pressure to the sandwich structure wherein the heating is done at or above the TMBP Tg.

11. A method of preparing a thermoplastic sandwich panel comprising:

a. Preparing or providing a core layer of a thermoplastic foam made of a polymer having a glass transition temperature (core Tg) wherein the core layer has an initial thickness;
b. Preparing or providing a first and a second face sheet made of a thermoplastic based matrix polymer having a glass transition temperature (TMBP Tg);
c. Providing thermoplastic adhesive films;
d. Arranging the thermoplastic adhesive films between the first face sheet and the core layer, and between the second face sheet and the core layer forming a sandwich structure; and
e. Adhering the first and the second face sheets to the core layer by applying heat and pressure to the sandwich structure wherein the heating is done at or above the melting temperature of the thermoplastic adhesive film.

12. The method according to claim 11 wherein the TMBP Tg is lower than or equal to the core Tg or wherein TMBP Tg is higher than the core Tg.

13. The method according to claim 10 wherein the heating is done at a temperature of at least 10°C higher than TMBP

Tg, more preferably at least 15°C, more preferably at least 30°C higher than TBMP Tg but wherein the temperature is below the core Tg, preferably 1-15°C below the core Tg, more preferably 2-10°C below the core Tg.

**14.** The method according to claim 11 wherein the melting temperature of the thermoplastic adhesive film is lower than the TMBP Tg and/or lower than core Tg.

**15.** The method according to claim 10 or 11 wherein the thermoplastic sandwich panel has a final core layer thickness and wherein the initial core layer thickness is 0.2 to 10.0mm larger than the final core layer thickness, preferably 0.3 to 5mm, more preferably 0.4 to 3mm, more preferably 0.5 to 1.0mm larger.

**16.** The method according to claim 10 or 11 wherein the face sheets are painted or decorated during the adhering to the thermoplastic foam using in mould-painting preferably by applying or adding paint to the mould or the face sheets prior to the step of applying pressure and heat to the mould, or using a decorative film that is welded to the face sheets in the mould when the face sheets are welded to core material.

**17.** A sandwich panel obtained by the method according to any of claim 10 to 16.

**18.** The sandwich panel according to any of the preceding claims wherein the reinforcing fibres is selected from glass fibres, carbon fibres, cellulose fibres, and aramid fibres.

**19.** The sandwich panel according to any of the preceding claims wherein the face sheets are dense or non-porous.

**20.** The sandwich panel according to any of the preceding claims wherein the core has an essentially homogenous cell structure or wherein the core is free from any channels or voids.

**21.** The sandwich panel according to any of the preceding claims wherein the core has an average cell size of less than 0.5mm, preferably less than 0.4mm, preferably a density of 150kg/m$^3$ or lower, more preferably 130kg/m$^3$ or lower, more preferably 100kg/m$^3$ or lower, more preferably 50kg/m$^3$ or lower, and wherein the thickness is preferably 70mm or lower, more preferably 50mm or lower.

**22.** The sandwich panel according to any of the preceding claims wherein the panel is essentially free from any solvent or crosslinked polymer system

**23.** The sandwich panel according to any one of claim 1 to 13 wherein the face sheets are adhered to the core layer via a thermoplastic adhesive film

**24.** The sandwich panel according to claim 8 or 9 wherein the face sheets are adhered to the core layer by heating and pressing.

**25.** The sandwich panel according to any of the preceding claims wherein the face sheets have a thickness in the range of 0.15mm to 1.5mm.

**26.** The sandwich panel according to any of the preceding claims wherein the sandwich panel fulfils the requirements of

a) Vertical burn 60s test according AITM 2.0002 A (issue 3) / CS 25, App. F, Part. I. §(a)(1)(i), Amdt 23 - FAA AMFTH Chapter 1
b) Determination of the Density of the Smoke according to AITM 2-0007 A (issue 3) - FAA AMFTH Chapter 6 - BSS 7238 Rev: (C)
c) Determination of the Toxic Components on Combustion Products (Flaming mode) according to AITM 3-0005 (issue 2) - BSS7239 Rev: (A)
d) Heat Release test according to AITM 2-0006 (issue 3) - FAA AMFTH Chapter 5 - BSS 7322 Rev: (B)

**27.** The sandwich panel according to any of the preceding claims wherein the peel strength of the panel with a polycarbonate TMBP is 18.0N/cm or higher, preferably 19N/cm or higher, more preferably 20N/cm or higher, more preferably 21N/cm or higher, more preferably 23N/cm or higher according to EN2243-3.

**28.** The sandwich panel according to any of the preceding claims wherein the panel is recyclable.

**29.** The sandwich panel according to any of the preceding wherein said panel is or is a part of aircraft cabin interior preferably sidewalls and ceiling panels, seat shells, lavatories, galleys, overhead bins and bin doors, bulkheads, floor panels or cargo linings.

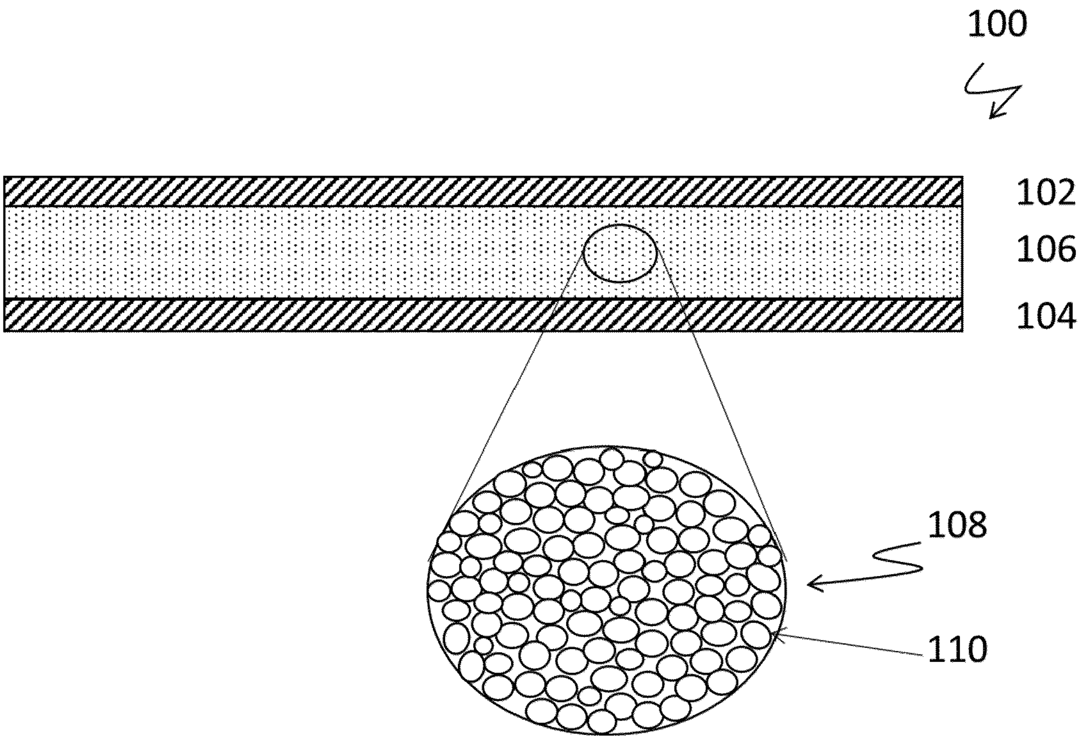


Figure 1.

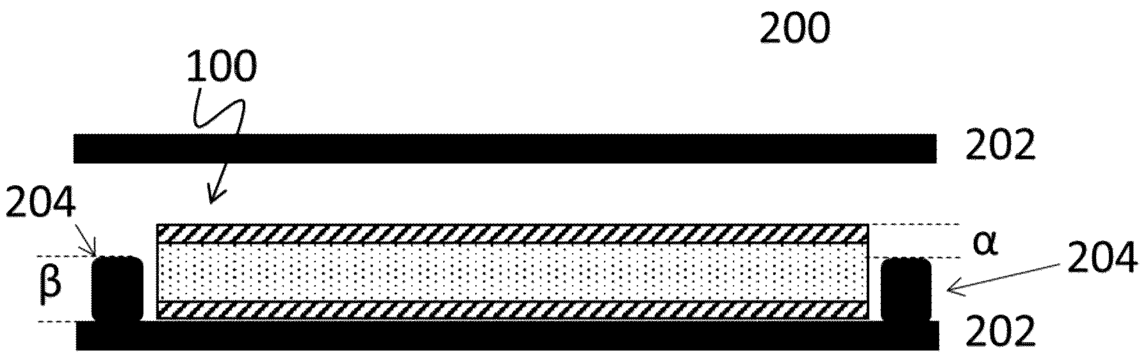


Figure 2.

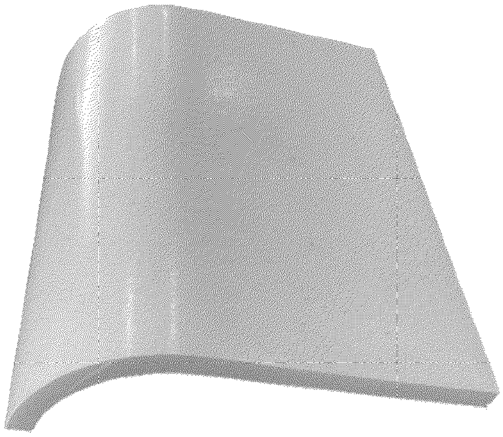

Figure 3.

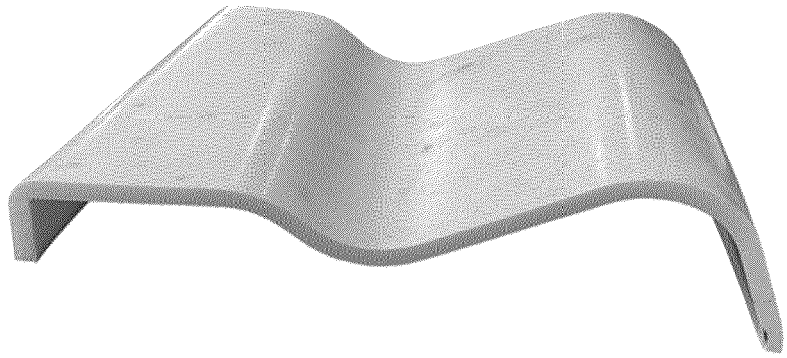

Figure 4.

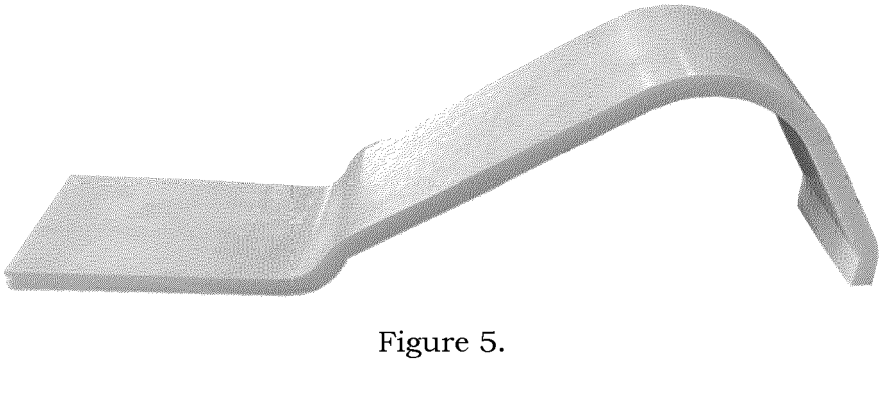

Figure 5.

| Panel | Face sheets TP | Fiber | No plies/ Thick. (mm) | Core/Thick. (mm) | Pressure (bar) | Welding Temp. (°C) | Time (s) | Heating & cooling ramps (°C/min) |
|---|---|---|---|---|---|---|---|---|
| 1 | PC 34% | Glass fibers fabric (7581) 2 layers/ply | 2/0.45 | 50kg/$m^3$ PES /12.8 (extra initial core thck. = +1.0mm) | 9 | 210 | 900 | 15 |
| 2 | PEI 33% | Glass fibers fabric (7781) 2 layers/ply | 2/0.45 | 50kg/$m^3$ PES /12.8 (extra initial core thck. = +1.0mm) | 9 | 220 | 900 | 15 |
| 3 | PC 34% | Glass fibers fabric (7581) 2 layers/ply | 2/0.45 | 50kg/$m^3$ PES /13.8 (extra initial core thck. = +2.0mm) | 9 | 210 | 900 | 15 |
| 4 | PC 34% | Glass fibers fabric (7581) 2 layers/ply | 2/0.45 | 50kg/$m^3$ PES /12.8 (extra initial core thck. = +1.0mm) | 9 | 205 | 900 | 15 |
| 5 | PC 34% | Glass fibers fabric (7581) 2 layers/ply | 2/0.45 | 50kg/$m^3$ PES /12.8 (extra initial core thck. = +1.0mm) | 9 | 200 | 900 | 15 |
| 6 | PC 34% | Glass fibers fabric (7581) 2 layers/ply | 2/0.45 | 50kg/$m^3$ PES /12.8 (extra initial core thck. = +1.0mm) | 9 | 190 | 900 | 15 |
| 7 | PC 34% | Glass fibers fabric (7581) 2 layers/ply | 2/0.45 | 50kg/$m^3$ PES /12.8 (extra initial core thck. = +1.0mm) | 9 | 185 | 900 | 15 |
| 8 | PC 34% | Glass fibers fabric (7581) | 2/0.45 | 50kg/$m^3$ PES /12.8 | 9 | 180 | 900 | 15 |

| | | | | | | | | |
|---|---|---|---|---|---|---|---|---|
| | | 2 layers/ply | | (extra initial core thck. = +1.0mm) | | | | |
| 9 | PC 34% | Glass fibers fabric (7581) 2 layers/ply | 2/0.45 | 50kg/$m^3$ PES /12.8 (extra initial core thck. = +1.0mm) | 9 | 170 | 900 | 15 |
| 10 | PC 34% | Glass fibers fabric (7581) 2 layers/ply | 2/0.45 | 50kg/$m^3$ PES /13.8 (extra initial core thck. = +2.0mm) | 9 | 200 | 900 | 15 |
| 11 | PC 34% | Glass fibers fabric (7581) 2 layers/ply | 2/0.45 | 50kg/$m^3$ PES /13.8 (extra initial core thck. = +2.0mm) | 9 | 205 | 900 | 15 |
| 12 | PEI | Glass fibers fabric (7781) 2 layers/ply | 2/0.45 | 50kg/$m^3$ PES /12.8 (extra initial core thck. = +1.0mm) | 9 | 215 | 900 | 15 |

Figure 6.

| Panel | Peel strength[1] | Vertical Burn 60s[2] | Heat Release [3] | Smoke Density [4] | Smoke Toxicity [5] |
|---|---|---|---|---|---|
| 1 | 25.1 | Burn length = 53.9mm<br>After flame time = 0s<br>After flame time drips = 0s | $HRR_{max\ 5min}$ = 53.9 kW/m²<br>$THR_{2min}$ = 5.0 kW.min/m² | Ds = 61 | Components content (ppm):<br>[CO] = 121 *(no requirements)*<br>[SO2] = 3 *(Airbus/Boeing requirements ⇔ < 100ppm)*<br>[NOx] = 2 ppm *(<100ppm)*<br>[HF] = 0 ppm *(<100ppm)*<br>[HCl] = 0 ppm *(<150ppm)*<br>[HCN] = 0 ppm *(<150ppm)* |
| 2 | 31.1 | Not tested but PEI face sheets have better fire behavior than PC so this test would be successful and even better. | $HRR_{max\ 5min}$ = 38.0 kW/m²<br>$THR_{2min}$ = 0.0 kW.min/m² | Ds = 1 | Components content (ppm):<br>[CO] = 58 *(no requirements)*<br>[SO2] = 1 *(Airbus/Boeing requirements ⇔ < 100ppm)*<br>[NOx] = 3 ppm *(<100ppm)*<br>[HF] = 0 ppm *(<100ppm)*<br>[HCl] = 0 ppm *(<150ppm)*<br>[HCN] = 0 ppm *(<150ppm)* |
| 3 | 29.6 | / | / | / | / |
| 4 | 24.8 | / | / | / | / |
| 5 | 24.4 | / | / | / | / |
| 6 | 23.9 | / | / | / | / |
| 7 | 22.6 | / | / | / | / |
| 8 | 20.6 | / | / | / | / |
| 9 | 10.4 | / | / | / | / |
| 10 | 28.2 | / | / | / | / |
| 11 | 27.0 | / | / | / | / |
| 12 | 10.2 | / | / | / | / |

Figure 7.

| Panel | TP face sheets | Fiber | No plies/ Thick. (mm) | Adhesive film TP | Core/Thick. (mm) | Pressure (bar) | Welding (°C) | Time (s) | Heating & cooling ramps (°C/min) |
|---|---|---|---|---|---|---|---|---|---|
| A | PC 34% | Glass fabric* 2 layers/ply | 2/0.45 | Co polyester | 50kg/$m^3$ PES /12.8*** | 9 | 140 | 900 | 15 |
| B | PEI 33% | Glass fabric** 2 layers/ply | 2/0.45 | Co polyester | 50kg/$m^3$ PES /12.8 *** | 9 | 140 | 900 | 15 |

*Type 7581

** Type 7781

***Extra initial core thck. = +1.0mm

Figure 8.

| Panel | Peel strength (1) | Vertical Burn 60s (2) | Heat Release (3) | Smoke Density (4) | Smoke Toxicity (5) |
|---|---|---|---|---|---|
| A | 27.3 N/cm | Not tested but same panel without TP adhesive film passes easily the test and Heat Release tests (the most complicated Fire tests) also passed with TP adhesive film so this test must pass easily. | $HRR_{max\ 5min}$ = 43.2 kW/m² <br> $THR_{2min}$ = 15.7 kW.min/m² | Not tested but no extra risk due to the adhesive film compared to the Smoke Density test done without the film | Not tested but no extra risk due to the adhesive film compared to the Smoke Toxicity test done without the film |
| B | 27.8 | Not tested but same panel without TP adhesive film passes easily the test and Heat Release tests (the most complicated Fire tests) also passed with TP adhesive film so this test must pass easily. | $HRR_{max\ 5min}$ = 20.5 kW/m² <br> $THR_{2min}$ = 8.1 kW.min/m² | Not tested but no extra risk due to the adhesive film compared to the Smoke Density test done without the film | Not tested but no extra risk due to the adhesive film compared to the Smoke Toxicity test done without the film |

Figure 9.

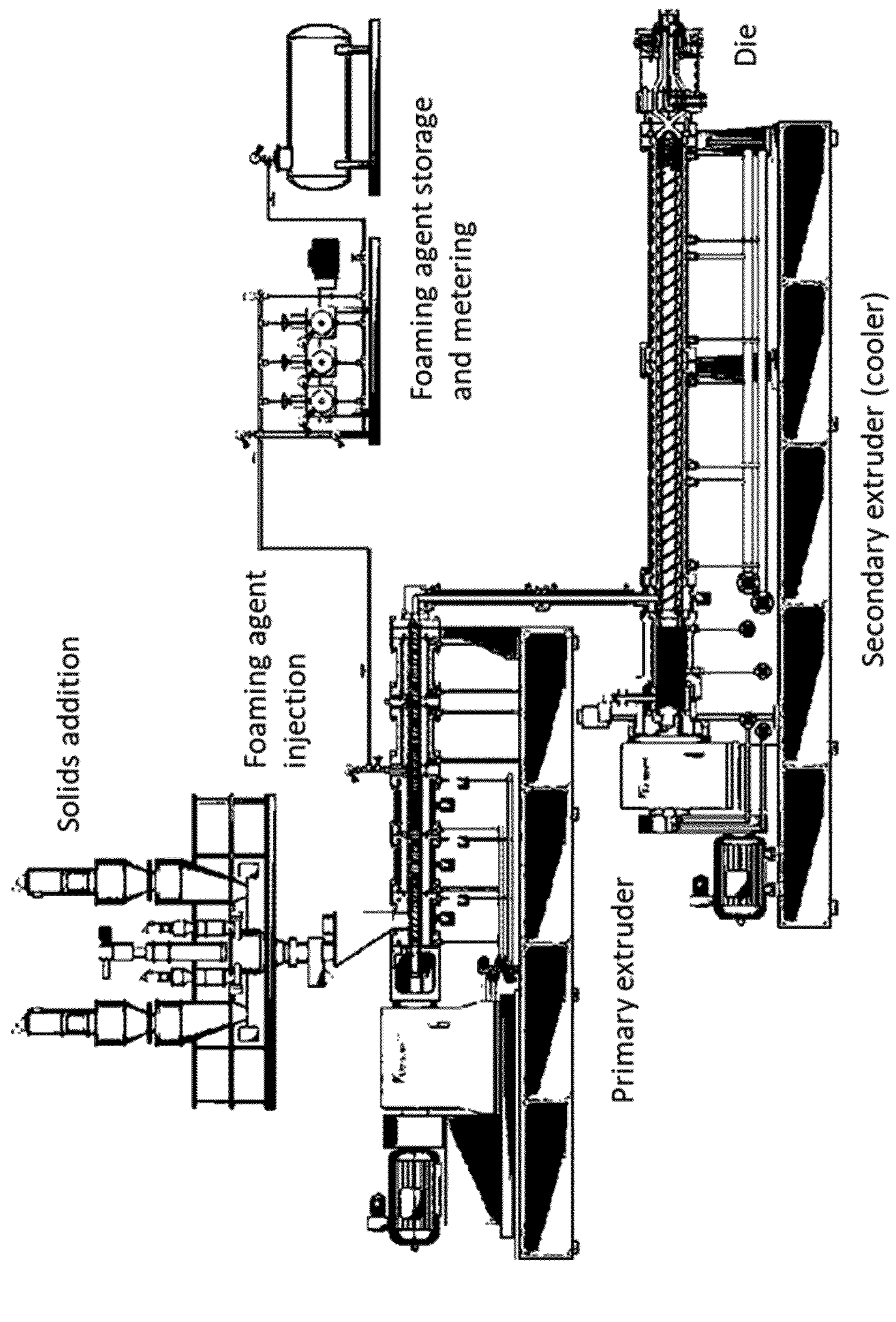
Solids addition
Foaming agent injection
Foaming agent storage and metering
Die
Primary extruder
Secondary extruder (cooler)

Figure 10.

Europäisches Patentamt
European Patent Office
Office européen des brevets

# EUROPEAN SEARCH REPORT

Application Number
EP 21 21 0261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2007/129886 A1 (FITS HOLDING BV [NL]; DE GROOT MARTIN THEODOOR [NL]) 15 November 2007 (2007-11-15)<br>* claims 1,2,19 *<br>* page 11, line 16 - line 23 *<br>* page 11, line 25 *<br>----- | 1,4,6,7, 9,10,17, 18<br>2,3,5,8, 11-16, 19-29 | INV.<br>B32B5/18<br>B32B27/04<br>B32B27/08<br>B32B27/28<br>B32B27/30<br>C08L79/08<br>C08L81/06 |
| A | WO 2020/214871 A1 (CYTEC IND INC [US]) 22 October 2020 (2020-10-22)<br>* claim 1 *<br>----- | 1 | |
| | | | TECHNICAL FIELDS SEARCHED (IPC) |
| | | | B32B<br>C09J<br>C08L |

The present search report has been drawn up for all claims

| Place of search | Date of completion of the search | Examiner |
|---|---|---|
| The Hague | 8 April 2022 | Hillebrand, Gerhard |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 21 0261

This annex lists the patent family members relating to the patent documents cited in the above-mentioned European search report. The members are as contained in the European Patent Office EDP file on
The European Patent Office is in no way liable for these particulars which are merely given for the purpose of information.

08-04-2022

| Patent document cited in search report | Publication date | Patent family member(s) | Publication date |
|---|---|---|---|
| WO 2007129886 A1 | 15-11-2007 | EP 2015924 A1 | 21-01-2009 |
| | | NL 1031768 C2 | 09-11-2007 |
| | | US 2009297758 A1 | 03-12-2009 |
| | | US 2015118440 A1 | 30-04-2015 |
| | | WO 2007129886 A1 | 15-11-2007 |
| WO 2020214871 A1 | 22-10-2020 | CN 113710472 A | 26-11-2021 |
| | | EP 3956137 A1 | 23-02-2022 |
| | | WO 2020214871 A1 | 22-10-2020 |

EPO FORM P0459

For more details about this annex : see Official Journal of the European Patent Office, No. 12/82